# EUROPÄISCHE PATENTSCHRIFT

(11) **EP 2 975 083 B1**
(45) Veröffentlichungstag und Bekanntmachung des Hinweises auf die Patenterteilung: **25.01.2017**
(21) Anmeldenummer: 14176949.7
(22) Anmeldetag: 14.07.2014
(51) Int. Cl.: C08K 5/00, C08K 5/29, C08G 18/79, C08G 18/42

(54) **Verfahren zur Stabilisierung von biobasiertem Kunststoff auf Basis von Polyesterharz**
Method for the stabilisation of biobased plastic based on polyester resin
Procédé de stabilisation de plastique à base biologique et de résine de polyester

(43) Veröffentlichungstag der Anmeldung: 20.01.2016
(73) Patentinhaber: Rhein Chemie Rheinau GmbH, 68219 Mannheim (DE)
(72) Erfinder: Schönhaber, Martina, 64287 Darmstadt (DE); Laufer, Wilhelm, 67158 Ellerstadt (DE)
(74) Vertreter: Siegers, Britta

(56) Entgegenhaltungen:
- EP-A1- 0 890 604
- EP-A1- 1 514 897
- EP-A1- 2 418 247
- DE-A1- 10 146 328

## Beschreibung

Gegenstand der vorliegenden Erfindung ist ein Verfahren zur Stabilisierung von biobasiertem Kunststoff auf Basis von Polyesterharz mittels bestimmter Carbodiimide.

Kunststoffe auf Basis von Polyesterharzen sind mittels Kondensationspolymerisation hergestellte Polymere, die Esterbindungen enthalten.

Biobasierte Kunststoffe, sogenannte Biopolymere, sind im Vergleich zu petrochemisch basierten Kunststoffen aufgrund der eingesetzten biobasierten Rohstoffe ökologisch nachhaltigere Werkstoffe. Insbesondere im Hinblick auf den Umweltschutz und die drohende Klimaerwärmung haben biobasierte Kunststoffe eine zunehmend Bedeutung nicht nur im Bereich Verpackung, sondern auch bei der Herstellung langlebiger sowie technischer Kunststoffprodukte erlangt. Um jedoch biobasierte Werkstoffe im Vergleich zu herkömmlichen und etablierten Werkstoffen konkurrenzfähig zu machen, sind vielfach noch Optimierungen in der Werkstoffherstellung und -verarbeitung notwendig.

Biobasierte Kunststoffe aus aliphatischem Polyesterharz, werden durch Polymerisation fermentativ gewonnener Monomere aus Stärke, Zucker, Kohlenhydraten, Pflanzenöl oder Fetten hergestellt. Ebenso handelt es sich bei biobasierten Kunststoffen um aliphatisch-aromatische Polyester, welche auf einer biogen hergestellten Diolkomponente basieren, sowie um Biopolyamide, bei denen die Säurekompontente aus natürlich vorkommenden Stoffen gewonnen wird.

Biobasierte Kunststoffe haben den großen Vorteil, dass sie sehr umweltfreundlich sind. Nachteiligerweise sind diese jedoch sowohl während der Verarbeitung als auch im Einsatz in Endprodukten sehr hydrolyseempfindlich. Hydrolyse äußert sich durch die typischen Anzeichen wie Molmassenverlust und Viskositätsabnahme und ist ohne Stabilisierung unvermeidbar. Sie führt zu einer schlechteren Verarbeitbarkeit und zu einer kürzeren Lebensdauer des Endproduktes.

Es wurde versucht, über den Zusatz verschiedenster Additive dieses Problem zu lösen. So werden beispielsweise in EP-A 0 890 604 sowie EP-A 1 277 792 Carbodiimidverbindungen zur Stabilisierung von biologisch abbaubaren Kunststoffzusammensetzungen eingesetzt. Bei den dort beschriebenen Carbodiimiden handelt es sich um aliphatische und aromatische monomere und oligomere Carbodiimide, die aber nur zu einem geringen Anstieg der Lebensdauer führen.

Die in EP-A 1354917 zusätzlich eingesetzten Antioxidantien reduzieren zwar die Gelbfärbung, erhöhen aber nicht die Stabilität. Gleiches gilt für die EP-A 1 876 205 bei der eine Biopolymerzusammensetzung aus einem biologisch abbaubaren Polyester mit einem Carbodiimid, einer Phosphitverbindung und einer Silikatverbindung eingesetzt wird.

Aus EP-A 1627894 ist die Herstellung einer Folie aus aliphatischen Polyesterharzen, bevorzugt Polymilchsäure, bekannt, wobei eine Vielzahl von Carbodiimiden zur Stabilisierung erwähnt wird. Das Kriterium der Langzeitstabilität wird jedoch hier nur bedingt erfüllt.

Es bestand daher die Aufgabe, ein Verfahren zur Stabilisierung von biobasiertem Kunststoff auf Basis von Polyesterharz bereitzustellen, welches die Nachteile des Standes der Technik nicht aufweist und für eine effizientere Hydrolysestabilität sorgt.

Überraschenderweise wurde nun gefunden, dass die in dem erfindungsgemäßen Verfahren eingesetzten Carbodiimide diese Aufgabe erfüllen.

Gegenstand der vorliegenden Erfindung ist daher ein Verfahren zur Stabilisierung von biobasierten Kunststoff auf Basis von Polyesterharz, wobei Carbodiimide der Formel (I) 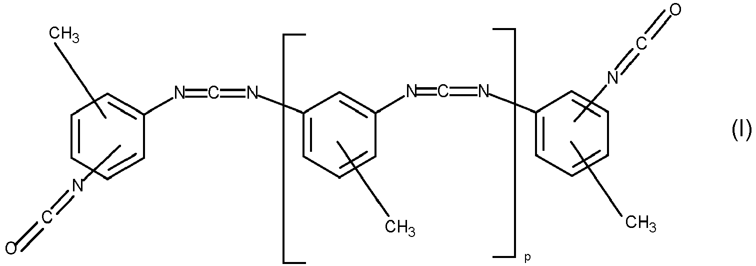 mit p = 0 bis 50, vorzugsweise p = 0 bis 10, in den Kunststoff eingearbeitet werden.

In einer besonders bevorzugten Ausführungsform der vorliegenden Erfindung handelt es sich bei dem Carbodiimid um eine Verbindung der Formel (II)

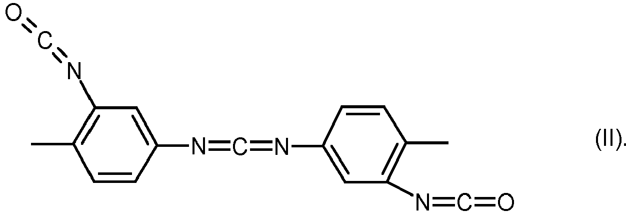

Bei den eingesetzten Carbodiimide der Formeln (I) und (II) handelt es sich um handelsübliche Verbindungen, die bei der Firma Rhein Chemie Rheinau GmbH beispielsweise unter dem Handelsnamen Addolink ® ST erhältlich sind.

Ebenso möglich ist auch die Herstellung der Carbodiimide nach den beispielsweise in Angewandte Chemie 74 (21), 1962, S. 801 - 806 beschriebenen Verfahren oder durch die Kondensation von Diisocyanaten unter Abspaltung von Kohlendioxid bei erhöhten Temperaturen, vorzugsweise bei 40 °C bis 200 °C, in Gegenwart von Katalysatoren. Geeignete Verfahren werden in DE-B-1156401 und in der DE-B-11 305 94 beschrieben. Als Katalysatoren haben sich vorzugsweise starke Basen oder Phosphorverbindungen bewährt. Vorzugsweise werden Phospholenoxide, Phospholidine oder Phospholinoxide sowie die entsprechenden Sulfide verwendet. Ferner können als Katalysatoren tertiäre Amine, basisch reagierende Metallverbindungen, Carbonsäuremetallsalze und nicht basische Organometallverbindungen verwendet werden.

Bei den biobasierten Kunststoffen im Sinne der Erfindung handelt es sich vorzugsweise um aliphatische Polyesterharze, welche durch Polymerisation fermentativ gewonnener Monomere oder fermentativ gewonnener Polymere aus Stärke, Zucker, Kohlenhydraten, Pflanzenöl oder Fetten hergestellt worden sind, oder um aliphatisch-aromatische Polyesterharze, welche auf einer biogen hergestellten Diolkomponente basieren, sowie um Biopolyamide, bei denen die Säurekomponente aus natürlich vorkommenden Stoffen gewonnen wird.

In einer bevorzugten Ausführungsform der vorliegenden Erfindung handelt es sich bei dem biobasierten Polyesterharz um Polymilchsäure (PLA), Polyhydroxyalkanoate (PHA), Polybutylenadipat-Terephthalat (PBAT), Polybutylensuccinat (PBS) und/oder Polybutylensuccinatterephthalat (PBST), bevorzugt Polymilchsäure (PLA).

Dabei mit umfasst sind auch Blends aus biobasierten Kunststoffen, vorzugsweise Polymilchsäure (PLA), Polyhydroxyalkanoate (PHA), Polybutylenadipat-Terephthalat (PBAT), Polybutylensuccinat (PBS) und/oder Polybutylensuccinatterephthalat (PBST), mit Polycarbonat, Polybutylenterephthalat (PBT), Polymethylmethacrylat (PMMA), AcrylnitrilButadien-Styrol (ABS) und/oder Polyamid.

Der Begriff auf Basis von bedeutet dabei im Sinne der Erfindung vorzugsweise einen Anteil von mindestens 40 Gew.-%, besonders bevorzugt 45 - 100 Gew.-%, ganz besonders bevorzugt 50 bis 100 Gew.-%, bezogen auf den Kunststoff.

Die vorgenannten biobasierten Polyesterharze sind kommerziell erhältlich.

Die als aliphatisches Polyesterharz besonders bevorzugte Polymilchsäure ist ebenfalls kommerziell verfügbar, z.B. bei der Firma NatureWorks LLC oder kann nach den, dem Fachmann geläufigen Verfahren, wie z.B. durch Ringöffnungspolymerisation von Lactiden, hergestellt werden. Der Einsatz der Polymilchsäure, die durch Ringöffnungspolymerisation von Lactiden entstanden ist, ist dabei auf keines der beiden Enantiomere, L-Milchsäure oder D-Milchsäure oder Mischungen daraus, beschränkt. Im Sinne der Erfindung sind dabei die Polymere aus L-Milchsäure und/oder D-Milchsäure als aliphatisches Polyesterharz einsetzbar. Auch andere Formen für Polymilchsäure sowie Copolymere, welche Polymilchsäure enthalten, sind mitumfasst.

Die als aliphatisches Polyesterharz besonders bevorzugten Polyhydroxyalkanoate sind kommerziell verfügbar, z. B. bei der Firma Metabolix Inc., oder können nach den, dem Fachmann geläufigen Verfahren, wie z. B. durch mikrobielle Fermentation aus Zucker oder Fetten, hergestellt werden.

Vorzugsweise werden in dem erfindungsgemäßen Verfahren 0,3- 2,5 Gew.%, besonders bevorzugt 0,5 - 2,0 Gew.%, ganz besonders bevorzugt 1 bis 1,5 Gew.-% eines Carbodiimids der Formel (I) und/oder (II) eingearbeitet.

Die Carbodiimide können dabei über alle gängigen Rühr- und Mischaggregate in den Kunststoff eingearbeitet werden. Bevorzugt sind hier Extruder oder Kneter, besonders bevorzugt Extruder. Dabei handelt es sich um handelsübliche Aggregate.

In einer bevorzugten Ausführungsform der vorliegenden Erfindung erfolgt die Einarbeitung bei Temperaturen von 150 bis 280°C.

In einer weiteren Ausführungsform des erfindungsgemäßen Verfahrens werden weitere Additive, vorzugsweise Nukleierungsmittel, Fasern zur Verstärkung, Schlagzähigkeitsmodifikatoren, Fließverbesserer und/oder UV-Stabilisatoren eingesetzt.

Deren Anteil kann 0,05 bis 40 Gew.%, bezogen auf den Kunststoff, betragen.

Die Erfindung umfasst daher die Verwendung von Carbodiimiden der Formel (I) 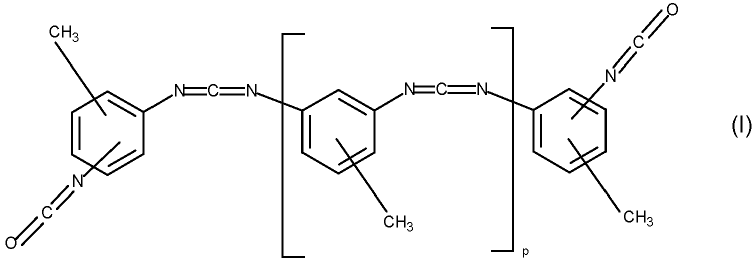 mit p = 0 bis 50, vorzugsweise p = 0 bis 10,
und/oder der Formel (II) 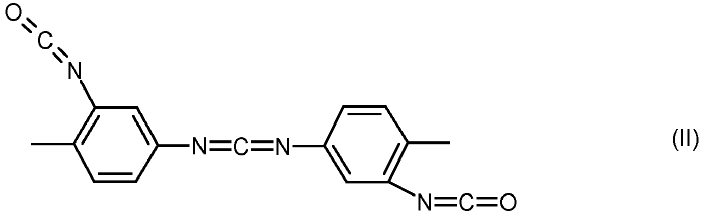 zum Hydrolyseschutz von biobasierten Kunststoffen.

Der Anteil der Verbindungen der Formel (I) und/oder (II) beträgt dabei vorzugsweise 0,3-2,5 Gew.-%, besonders bevorzugt 0,5 - 2,0 Gew.-%, ganz besonders bevorzugt 1 bis 1,5 Gew.-%.

Der Rahmen der Erfindung erfasst alle oben stehenden und im Folgenden aufgeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

Die nachfolgenden Beispiele dienen der Erläuterung der Erfindung, ohne dabei limitierend zu wirken.

### Ausführungsbeispiele:

### Verwendete Chemikalien:

CDI I: ein Carbodiimid gemäß Formel (II) für das erfindungsgemäße Beispiel.
CDI II: Bis-2,6- diisopropylphenylcarbodiimid für das Vergleichsbeispiel
CDI III: polymeres Carbodiimid auf Basis von Triisopropylphenyldiisocyanat für das Vergleichsbeispiel
Kommerziell erhältliche Polymilchsäure (PLA) der Firma NatureWorks LLC vom Typ 3251 D

### Durchführung:

Die Einarbeitung der jeweiligen Carbodiimide in die Polymilchsäure erfolgte mittels eines Labordoppelschneckenextruders ZSK 25 der Firma Werner & Pfleiderer bei einer Temperatur von 190°C.

Die eingesetzten Mengen an Carbodiimid und die Art des eingesetzten Carbodiimids ergeben sich aus Tabelle 1.

Die F3-Normprüfkörper wurden an einer Spritzgießmaschine des Typs Arburg Allrounder 320 S 150 - 500 erstellt.

Für den Hydrolysetest von Polymilchsäure (PLA) wurden die F3-Normprüfkörper in Wasser bei einer Temperatur von 65°C gelagert und nach verschiedenen Zeiteinheiten wurde die Zugfestigkeit überprüft. Bei dem Austesten der Hydrolysebeständigkeit wird bestimmt, nach wie vielen Tagen die Zugfestigkeit einen Wert von 5 MPa unterschritten hat. Das Vergleichsbeispiel 1 ist Polymilchsäure (PLA) ohne Carbodiimid.

**Tabelle 1: Hydrolysebeständigkeit**

| Beispiel | CDI | Konzentration CDI | Dauer Hydrolyseschutz [Tage] |
|---|---|---|---|
| 1 (V) | - | - | 4 |
| 2 (E) | CDI I | 1% | 10 |
| 3 (E) | CDI I | 1,5% | 16 |
| 4 (V) | CDI II | 1% | 7 |
| 5 (V) | CDI II | 1,5% | 11 |
| 6 (V) | CDI III | 1% | 8 |
| 7 (V) | CDI III | 1,5% | 11 |

Aus der Tabelle ist ersichtlich, dass sich mit dem erfindungsgemäßen Verfahren bereits bei niedrigerer Konzentration an Carbodiimid die Hydrolysestabilität erreicht werden kann, den die im Stand der Technik bekannten Carbodiimide erst bei deutlich höheren Konzentrationen erreichen.

## Patentansprüche

1. Verfahren zur Stabilisierung von biobasiertem Kunststoff auf Basis von Polyesterharz, **dadurch gekennzeichnet, dass** Carbodiimide der Formel (I) 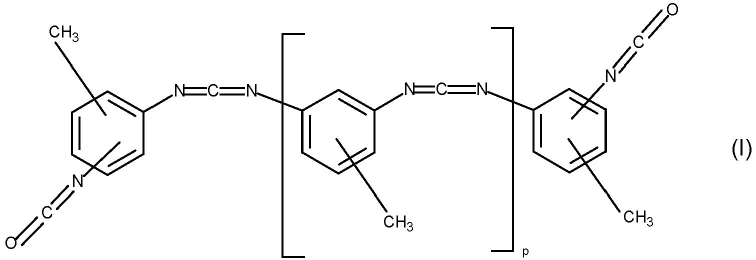 mit p = 0 bis 50, vorzugsweise p = 0 bis 10 sein kann, in den Kunststoff eingearbeitet werden.

2. Verfahren nach Anspruch 1, **dadurch gekennzeichnet, dass** es sich bei dem Carbodiimid um eine Verbindung der Formel (II) 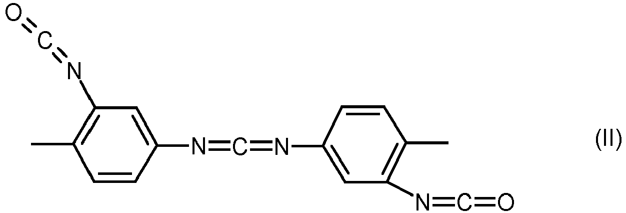 handelt.

3. Verfahren nach Anspruch 1 oder 2, **dadurch gekennzeichnet, dass** 0,3 - 2,5 Gew.%, bevorzugt 0,5 - 2,0 Gew.-%, ganz besonders bevorzugt 1 bis 1,5 Gew.-% eines Carbodiimids der Formel (I) oder (II) eingesetzt wird.

4. Verfahren nach Anspruch 1 bis 3, **dadurch gekennzeichnet, dass** es sich bei dem biobasierten Kunststoff auf Basis von Polyesterharz um aliphatische Polyesterharze handelt, die durch Polymerisation fermentativ gewonnener Monomere oder fermentativ gewonnener Polymere aus Stärke, Zucker, Kohlenhydraten, Pflanzenöl oder Fetten hergestellt worden sind, oder um aliphatisch-aromatische Polyesterharze, welche auf einer biogen hergestellten Diolkomponente basieren, sowie um Biopolyamide, bei denen die Säurekomponente aus natürlich vorkommenden Stoffen gewonnen wird.

5. Verfahren nach Anspruch 4, **dadurch gekennzeichnet, dass** es sich bei dem biobasierten Polyesterharz um Polymilchsäure (PLA), Polyhydroxyalkanoate (PHA), Polybutylenadipat-Terephthalat (PBAT), Polybutylensuccinat (PBS) und/oder Polybuytlensuccinatterephthalat (PBST), bevorzugt Polymilchsäure (PLA), handelt.

6. Verfahren nach einem der Ansprüche 1 bis 5, **dadurch gekennzeichnet, dass** die Einarbeitung mittels eines Extruders erfolgt.

7. Verfahren nach einem der Ansprüche 1 bis 6, **dadurch gekennzeichnet, dass** die Einarbeitung bei einer Temperatur von 150 bis 280°C erfolgt.

8. Verfahren nach einem der Ansprüche 1 bis 7, **dadurch gekennzeichnet, dass** als weitere Additive Nukleierungsmittel, Fasern zur Verstärkung, Schlagzähigkeitsmodifikatoren, Fließverbesserer und/oder UV-Stabilisatoren eingesetzt werden.

9. Verwendung von Carbodiimiden der Formel (I) 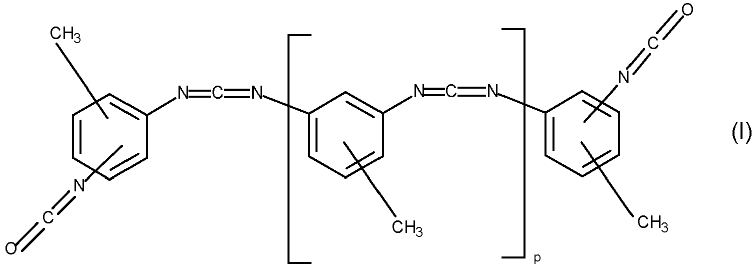 mit p = 0 bis 50, vorzugsweise p = 0 bis 10,
und/oder der Formel (II) 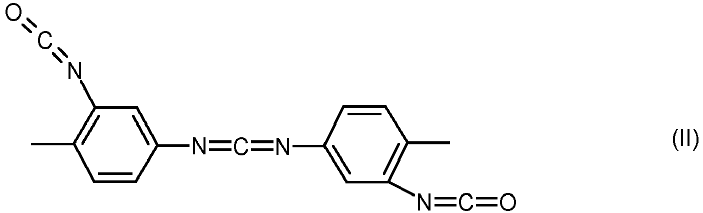 zum Hydrolyseschutz von biobasierten Kunststoffen.

## Claims

1. Process for the stabilization of biobased plastic based on polyester resin, **characterized in that** carbodiimides of the formula (I) 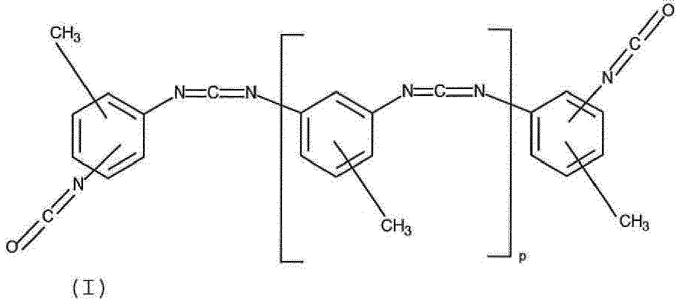 where p can be from 0 to 50, preferably from 0 to 10, are incorporated into the plastic.

2. Process according to Claim 1, **characterized in that** the carbodiimide is a compound of the formula (II)

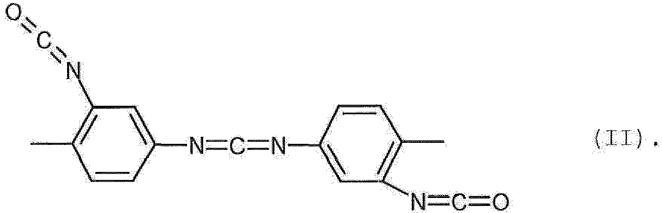

3. Process according to Claim 1 or 2, **characterized in that** 0.3 - 2.5% by weight, preferably 0.5 - 2.0% by weight, very particularly preferably 1 - 1.5% by weight, of a carbodiimide of the formula (I) or (II) is/are used.

4. Process according to any of Claims 1 to 3, **characterized in that** the biobased plastic based on polyester resin is an aliphatic polyester resin produced by polymerisation of monomers obtained by fermentation or of polymers obtained by fermentation from starch, from sugar, from carbohydrates, from fats, or from vegetable oil, or is aliphatic-aromatic polyester resin based on a biogenically produced diol component, or is biopolyamide in which the acid component is obtained from naturally occurring substances.

5. Process according to Claim 4, **characterized in that** the biobased polyester resin is polylactic acid (PL), polyhydroxyalkanoate (PHA), polybutylene adipate terephthalate (PBAT), polybutylene succinate (PBS), and/or polybutylene succinate terephthalate (PBST), preferably polylactic acid (PLA).

6. Process according to any of Claims 1 to 5, **characterized in that** the incorporation is achieved by means of an extruder.

7. Process according to any of Claims 1 to 6, **characterized in that** the incorporation is achieved at a temperature of from 150 to 280°C.

8. Process according to any of Claims 1 to 7, **characterized in that** nucleating agents, reinforcement fibers, impact modifiers, flow improvers, and/or UV stabilizers are used as further additives.

9. Use of carbodiimides of the formula (I) 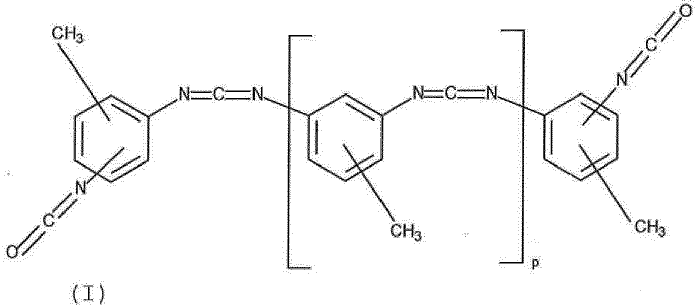 where p = 0 to 50, preferably p = 0 to 10,
and/or of the formula (II) 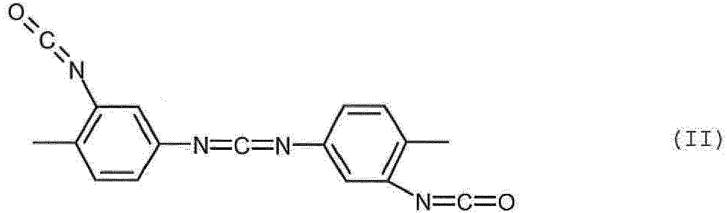 for protecting biobased plastics from hydrolysis.

## Revendications

1. Procédé pour la stabilisation d'un matériau synthétique à base biologique, à base de résine de polyester, **caractérisé en ce que** des carbodiimides de formule (I) 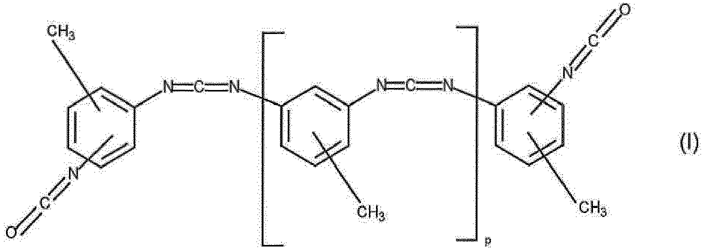 dans laquelle p = 0 à 50, de préférence p = 0 à 10, sont incorporés dans le matériau synthétique.

2. Procédé selon la revendication 1, **caractérisé en ce qu'**il s'agit, pour le carbodiimides, d'un composé de formule (II)

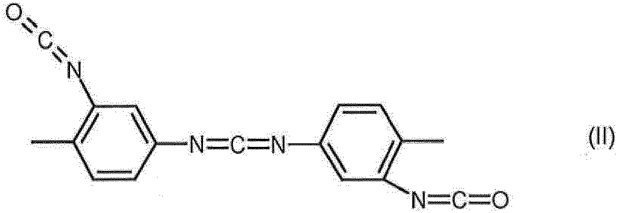

3. Procédé selon la revendication 1 ou 2, **caractérisé en ce qu'**on utilise 0,3-2,5% en poids, de préférence 0,5-2,0% en poids, de manière tout particulièrement préférée 1 à 1,5% en poids d'un carbodiimide de formule (I) ou (II).

4. Procédé selon la revendication 1 à 3, **caractérisé en ce qu'**il s'agit, pour le matériau synthétique à base biologique, à base de résine de polyester, de résines de polyester aliphatiques, qui ont été préparées par polymérisation de monomères obtenus par fermentation ou de polymères obtenus par fermentation à partir d'amidon, de sucre, d'hydrates de carbone, d'huile végétale ou de graisses, ou de résines de polyester aliphatiques-aromatiques, qui sont à base d'un composant diol préparé par voie biogène, ainsi que de biopolyamides, dans lesquels le composant acide est obtenu à partir de substances naturelles.

5. Procédé selon la revendication 4, **caractérisé en ce qu'**il s'agit, pour la résine de polyester à base biologique, de poly(acide lactique) (PLA), de polyhydroxyalcanoates (PHA), de poly(adipate-téréphtalate de butylène) (PBAT), de poly(succinate de butylène) (PBS) et/ou de poly(succinate-téréphtalate de butylène) (PBST), de préférence de poly(acide lactique) (PLA).

6. Procédé selon l'une quelconque des revendications 1 à 5, **caractérisé en ce que** l'incorporation est réalisée à l'aide d'une extrudeuse.

7. Procédé selon l'une quelconque des revendications 1 à 6, **caractérisé en ce que** l'incorporation a lieu à une température de 150°C à 280°C.

8. Procédé selon l'une quelconque des revendications 1 à 7, **caractérisé en ce qu'**on utilise, comme autres additifs, des agents de nucléation, des fibres pour le renforcement, des modificateurs de la résilience, des agents d'amélioration de l'écoulement et/ou des stabilisants aux UV.

9. Utilisation de carbodiimides de formule (I) 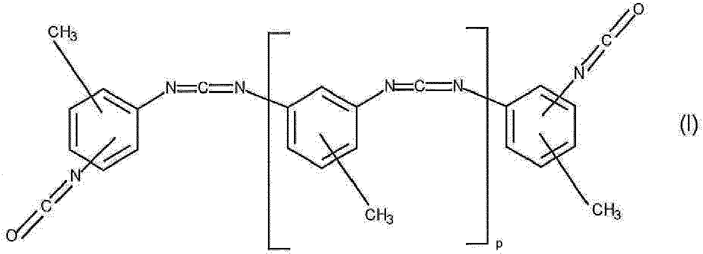 dans laquelle p = 0 à 50, de préférence p = 0 à 10 et/ou de formule (II) 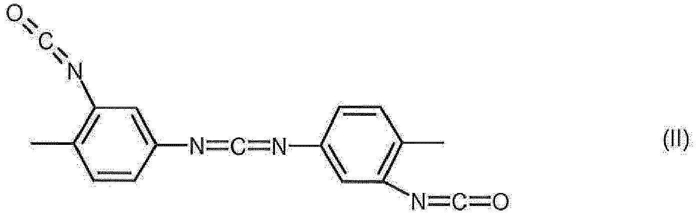 pour la protection contre l'hydrolyse de matériaux synthétiques à base biologique.
